# EUROPÄISCHE PATENTSCHRIFT

(11) **EP 1 427 605 B1**
(45) Veröffentlichungstag und Bekanntmachung des Hinweises auf die Patenterteilung: **21.11.2007**
(21) Anmeldenummer: 02750828.2
(22) Anmeldetag: 11.07.2002
(51) Int. Cl.: B60R 16/02, H02J 1/14

(54) **STABILISIERUNG EINES BORDNETZES DURCH ERZEUGUNG KURZFRISTIG VERFÜGBARER ENERGIE**
STABILISATION OF A VEHICLE NETWORK BY GENERATING SHORT-TERM AVAILABLE POWER
STABILISATION D'UN RESEAU DE BORD PAR LA CREATION D'ENERGIE DISPONIBLE A COURT TERME

(30) Priorität: 15.08.2001 DE 10138851; 13.11.2001 DE 10155670
(43) Veröffentlichungstag der Anmeldung: 16.06.2004
(73) Patentinhaber: ROBERT BOSCH GMBH, 70442 Stuttgart (DE)
(72) Erfinder: BISCHOF, Hubert, 71665 Vaihingen/Enz (DE); NASSWETTER, Guenter, 72810 Gomaringen (DE); SUELZLE, Helmut, 71691 Freiberg (DE); KNAPP, Marc, 71729 Erdmannhausen (DE)
(86) Internationale Anmeldenummer: PCT/DE2002/002532
(87) Internationale Veröffentlichungsnummer: WO 2003/016097

(56) Entgegenhaltungen:
- EP-A- 1 103 426
- DE-A- 19 960 079
- US-B1- 6 208 931

## Beschreibung

### Technisches Fachgebiet

Die Erfindung betrifft ein Verfahren zur Stabilisierung eines Energieversorgungssystems, insbesondere eines KFZ-Bordnetzes gemäß dem Oberbegriff des Patentanspruchs 1

Die Energieversorgung für KFZ-Bordnetze erfolgt in der Regel durch wenigstens eine Batterie und einen Generator. Unter normalen Voraussetzungen hat die Batterie eine ausreichende Speicher- und Pufferwirkung, um die Netzspannung stabil zu halten, das heißt, die Batterie versorgt einen neu zugeschalteten Verbraucher zwischenzeitlich mit Energie, bis der Generator auf ein höheres Leistungsniveau eingeregelt ist.

Zunehmend werden Systeme, wie z. B. elektrohydraulische Bremsen oder elektrische Servolenkungen in Fahrzeugen eingesetzt, für deren Betrieb eine stabile elektrische Energieversorgung wichtig ist. Insbesondere muß die Funktion sicherheitsrelevanter Systeme gewährleistet sein und darf beispielsweise nicht durch unzulässige Spannungseinbrüche gefährdet werden. Bei voller Funktionsfähigkeit der Batterie ist genügend Pufferwirkung vorhanden, um diese Forderung zu erfüllen.

Ist aber die Batterie beispielsweise vor Fahrantritt entleert, und wird das Fahrzeug mit Fremdstarthilfe gestartet, so ist die Pufferwirkung der Batterie nicht ausreichend. Gleiches gilt auch bei einer schwachen oder defekten Batterie, die weniger Reserveleistung bereitstellen kann.

Wird nun ein elektrischer Verbraucher mit ausgeprägtem Anlaufstrom zugeschaltet, so kann der Generator aufgrund der relativ großen Erregerkreiszeitkonstante (circa 50-100ms) nur vergleichsweise langsam reagieren und die Bordnetzspannung fällt kurzzeitig unter zulässige Werte. Auch Steuergeräte sicherheitsrelevanter Systeme können dadurch kurzzeitig ausfallen. Am Beispiel einer elektrischen Lenkung oder Bremse stellt dies einen sehr kritischen Zustand für die Beherrschbarkeit des Fahrzeugs dar. Es muß daher das Ziel sein, eine schnelle Spannungsstabilisierung zu erreichen.

Aus dem Stand der Technik ist es bekannt, bei schwacher oder ausgefallener Hauptbatterie eine Hilfsbatterie zuzuschalten, bis die Hauptbatterie aufgeladen oder ausgetauscht wurde. Eine anderweitige Spannungsstabilisierung ist damit nicht erforderlich. Andererseits muß eine zusätzliche Pufferbatterie mit Überwachungselektronik und ein Schaltelement zusätzlich vorgesehen werden.

Die Druckschrift DE 19960079 A1 beschreibt verschiedene Verfahren zur Ein- bzw. Abschaltung von Verbrauchern in einem Fahrzeugbordnetz. Diese Verbraucher werden mit Hilfe eines in einem Steuergerät ablaufenden Energiemanagements zu- bzw. abgeschaltet. Dazu werden den Verbrauchern Prioritäten für die Zu- bzw. Abschaltung zugeordnet. Zur Sicherstellung der elektrischen Energieversorgung werden die Verbraucher ausgehend von ihren Prioritäten zu- bzw. abgeschaltet. Zur Optimierung ist es möglich, die Prioritäten Zu- bzw. Abschaltung während des Betriebs zu verändern. Die Zuschaltung eines eigentlich nicht benötigten starken Verbrauchers zur Spannungsstabilisierung ist aus dieser Entgegenhaltung nicht bekannt..

Aus der EP 1103426 A1 ist ein Zweibatteriebordnetz bekannt, bei dem Verbraucher zu- bzw. abgeschaltet werden, wobei der jeweils vorliegende Batteriezustand berücksichtigt wird. Dabei werden Verfahren zur Leistungsverteilung durch geführt die Verbraucherinformationen wie Kennlinien und ähnliches bei der Ermittlung der Leistungsverteilung berücksichtigen. Hinweise auf eine spezielle Stabilisierung der Bordnetzspannung bei defekter oder sich in schlechtem Zustand befindlichen Batterie mittels hilfsweise zugeschalteter Verbraucher werden nicht gegeben.

Es ist daher die Aufgabe der vorliegenden Erfindung, eine einfachere Methode zur Stabilisierung der Bordnetzspannung zu realisieren.

Gelöst wird diese Aufgabe durch die im Patentanspruch 1 angegebenen Merkmale. Weitere Ausführungsformen der Erfindung sind Gegenstand von.Unteransprüchen.

### Vorteile der Erfindung

Der wesentliche Gedanke der Erfindung besteht darin, einen momentan nicht benötigten Verbraucher mit ausreichend hoher elektrischer Leistungsaufnahme zuzuschalten, um somit den Generator auf ein höheres Leistungsniveau zu fahren. Wird nun ein weiterer elektrischer Verbraucher eingeschaltet, z. B. die elektrohydraulische Bremse betätigt, wird der hilfsweise zugeschaltete Verbraucher automatisch ausgeschaltet und die nun überschüssige Energie auf den neuen Verbraucher "umgeschaltet".

Das Ausschalten des hilfsweise zugeschalteten Verbrauchers erfolgt vorzugsweise entweder selbsttätig (durch Selbstauslösung), wenn beim Zuschalten eines neuen Verbrauchers eine vorgegebene Spannungsgrenze unterschritten wird oder mittels einer Steuereinheit, wenn diese z.B. feststellt, dass durch Zuschalten eines neuen Verbrauchers die Spannungsgrenze unterschritten werden würde.

Gemäß einer ersten Ausführungsform der Erfindung hat der hilfsweise zugeschaltete Verbraucher eine eigene Schalteinrichtung, welche den Verbraucher ausschaltet, wenn die Bordnetzspannung unter einen vorgegebenen Wert absinkt.

Gemäß einer anderen Ausführungsform der Erfindung wird das Ausschalten des hilfsweise zugeschalteten Verbrauchers durch eine zentrale Steuereinheit durchgeführt, die den Verbraucher vorzugsweise unmittelbar vor oder gleichzeitig mit dem Zuschalten des neuen Verbrauchers ausschaltet.

Der hilfsweise zugeschaltete Verbraucher kann dauerhaft zugeschaltet sein oder mittels einer Steuereinrichtung erst dann zugeschaltet werden, wenn die Batterie schwach oder nicht mehr funktionsfähig ist. Zur Überprüfung der Leistungsfähigkeit der Batterie ist vorzugsweise eine Batteriezustandserkennung vorgesehen, die mit der Steuereinrichtung in Verbindung steht.

Wird der hilfsweise zugeschaltete Verbraucher zwischenzeitlich vom System (bzw. vom Fahrzeuglenker) benötigt, wird vorzugsweise anstelle dieses Verbrauchers ein anderer, nicht benötigter Verbraucher automatisch eingeschaltet.

Um beim hilfsweisen Einschalten eines Verbrauchers nicht bereits einen Spannungseinbruch zu erzeugen, wird der Verbraucher stufenweise, über eine Rampe, o.ä. (nicht abrupt) eingeschaltet.

Geeignete Verbraucher mit hoher Leistungsaufnahme sind insbesondere Heizungen, z. B. die Heckscheiben- oder Sitzheizung.

Ein hilfsweise zugeschalteter Verbraucher wird vorzugsweise wieder ausgeschaltet, wenn sich die Batterie wieder aufgeladen hat oder ausgetauscht wurde.

### Zeichnungen

Die Erfindung wird nachstehend anhand der beigefügten Zeichnungen beispielhaft näher erläutert.

Es zeigen:
Figur 1 eine schematische Darstellung eines elektrischen KFZ-Bordnetzes;
Figur 2 ein Flußdiagramm eines Verfahrens zur Stabilisierung der Bordnetzspannung gemäß einem ersten Ausführungsbeispiel der Erfindung;
Figur 3 ein Flußdiagramm eines Verfahrens zur Stabilisierung der Bordnetzspannung gemäß einem zweiten Ausführungsbeispiel der Erfindung;
Figur 4 ein Verfahren zur Stabilisierung der Bordnetzspannung gemäß einem dritten Ausführungsbeispiel der Erfindung.

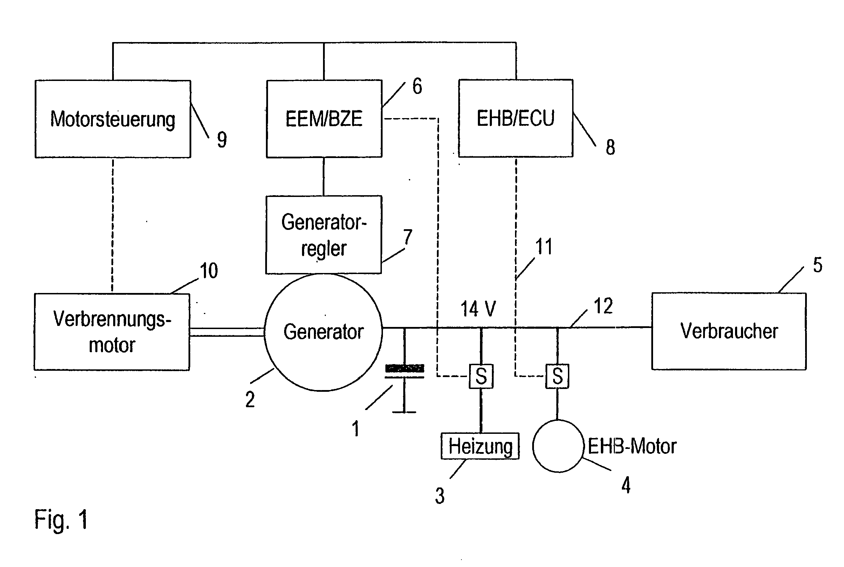

Figur 1 zeigt ein elektrisches KFZ-Bordnetz, das von einem Generator 2 und einer Batterie 1 gespeist wird.

Im Bordnetz sind mehrere Verbraucher, darunter eine Heizung 3, ein Motor 4 für die Füllung des Druckspeichers einer elektrohydraulischen Bremse, sowie verschiedene andere Verbraucher 5 angeschlossen. Die Verbraucher 5 umfassen in der Regel abschaltbare und nicht abschaltbare Lasten.

Die Heizung 3 sowie der Motor 4 für die elektrohydraulischen Bremsen (EHB) sind mit einer Schalteinrichtung S ausgestattet, mittels der die jeweiligen Verbraucher 3,4 abgeschaltet werden können. Die Schalteinrichtungen S sind über Steuerleitungen 11 mit ihren zugehörigen Steuerungen 6,8 (ECU: Electronic Control Unit) verbunden.

Die Steuereinheit 6 übernimmt die Aufgabe eines elektrischen Energiemanagements (EEM) und ist in der Lage, bei Überlastung des Bordnetzes Gegenmaßnahmen einzuleiten, indem z.B. bestimmte Lasten abgeschaltet oder gedimmt werden.

Die Steuerung 6 ist ferner mit einer Motorsteuerung 9 für einen Verbrennungsmotor 10 verbunden, die je nach Bedarf angesteuert wird.

Wie bereits erwähnt, kann es bei schwacher oder nicht mehr funktionsfähiger Batterie 1 zu Spannungseinbrüchen im Bordnetz kommen, wenn größere Verbraucher zugeschaltet werden. Die Steuereinheit 6 als auch die elektrische Steuereinheit 8 (ECU: Electric Control Unit) der elektrohydraulischen Bremse kann dadurch kurzfristig ausfallen. Am Beispiel einer elektrischen Lenkung oder der elektrohydraulischen Bremse stellt dies einen sehr kritischen Zustand für die Beherrschbarkeit des Fahrzeugs dar. Aus sicherheitstechnischen Erwägungen muß daher eine schnelle Spannungsstabilisierung erfolgen, um derartige Ausfälle zu verhindern.

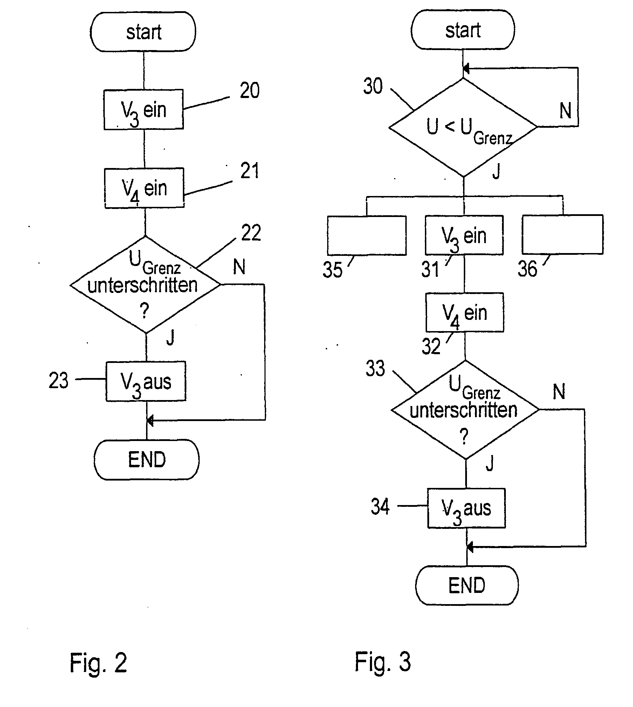

Eine Methode zur Stabilisierung der Bordnetzspannung ist in Figur 2 gezeigt. Dabei wird in Schritt 20 ein nicht benötigter Verbraucher mit ausreichend hoher Leistungsaufnahme eingeschaltet (erfolgt automatisch z.B. durch die Steuereinheit 6). Der hilfsweise zugeschaltete Verbraucher kann z.B. eine Heizung 3, insbesondere eine Heckscheibenheizung, sein. In diesem Fall wird der Verbraucher dauerhaft zugeschaltet, unabhängig davon, ob die Batterie 1 schwach ist oder nicht.

In Schritt 21 wird nun ein Verbraucher durch einen Nutzer zugeschaltet (der Fahrer schaltet beispielsweise die Sitzheizung ein).

Ist die Batterie 1 schwach oder nicht funktionsfähig, führt dies zu einem Spannungseinbruch im Bordnetz. Bei Unterschreiten einer vorgegebenen Spannungsgrenze (Überprüfung in Schritt 22) schaltet die Schalteinrichtung S des hilfsweise zugeschalteten Verbrauchers 3 diesen automatisch ab (Selbstauslösung, Schritt 33).

Ist dagegen die Batterie 1 ausreichend stark, hat sie ausreichend Pufferwirkung, um den neu zugeschalteten Verbraucher mit der benötigten Energie zu versorgen. In diesem Fall wird der hilfsweise zugeschaltete Verbraucher 3 nicht abgeschaltet.

Parallel dazu können weitere Maßnahmen zur Spannungsstabilisierung im Bordnetz eingeleitet werden. Zum Beispiel kann die Steuerung 6 die Erregung des Generators 2 deutlich erhöhen. Andere Leistungserhöhende Maßnahmen sind ebenfalls denkbar.

Figur 3 zeigt eine andere Methode zur Stabilisierung der Bordnetzspannung, bei der ein zusätzlicher Verbraucher erst dann hilfsweise zugeschaltet wird, wenn die Batterie schwach oder ganz ausgefallen ist, so dass deren Leistungsfähigkeit nicht mehr ausreicht, um einen weiteren Verbraucher ohne Spannungseinbruch zuzuschalten. Zur Beurteilung der Leistungsfähigkeit der Batterie 1 wird in diesem Fall eine Batteriezustandserkennung(BZE) genutzt, die in Schritt 30 die Leistungsfähigkeit der Batterie 1 feststellt. Ein zusätzlicher Verbraucher 3 wird in Schritt 31 erst dann hilfsweise zugeschaltet, wenn die Überprüfung eine schwache oder nicht funktionsfähige Batterie ergeben hat.

Parallel zum Zuschalten eines Verbrauchers kann die Steuerung 6 die Erregung des Generators 2 (Schritt 35) erhöhen oder andere leistungssteigernde Maßnahmen einleiten (Schritt 36). Die Schritte 32 bis 34 entsprechen den Schritten 21 bis 23 von Figur 2 und bedürfen daher keiner weiteren Erläuterung.

Die vorgegebene Spannungsgrenze, bei deren Unterschreiten die Schalteinrichtung S den hilfsweise zugeschalteten Verbraucher 3 abschaltet, liegt natürlich oberhalb der Ausfallgrenze der Steuereinheit (ECU) 8 für die elektrohydraulischen Bremsen.

Bei dieser Methode wird ein zusätzlicher Verbraucher also nur bei schwacher oder nicht funktionsfähiger Batterie hilfsweise zugeschaltet. Gegenüber der Methode von Figur 2 kann dadurch beträchtlich an Energie gespart werden.

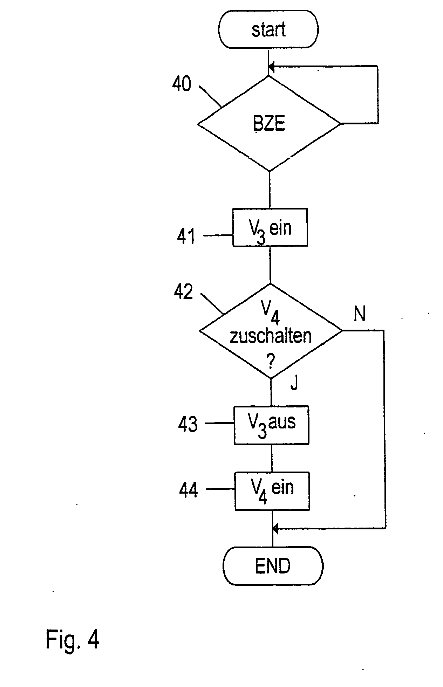

Figur 4 zeigt ein weiters Verfahren zur Stabilisierung der Spannung in einem Bordnetz. Auch bei dieser Methode wird eine Batteriezustandserkennung genutzt, um in Schritt 40 die Leistungsfähigkeit der Batterie 1 zu beurteilen und in Schritt 41 gegebenenfalls einen Verbraucher 3 hilfsweise zuzuschalten.

Soll nun ein weiterer Verbraucher, beispielsweise der Pumpenmotor 4 der elektrohydraulischen Bremse eingeschaltet werden, wird dies von der Steuereinheit 6 erkannt, die als Stabiblisierungsmaßnahme dann den hilfsweise zugeschalteten Verbraucher 3 in Schritt 43 ausschaltet und den neuen Verbraucher in Schritt 44 zuschaltet. Das Abschalten des hilfsweise zugeschalteten Verbrauchers 3 erfolgt vorzugsweise nur dann, wenn das Zuschalten des neuen Verbrauchers zu einem unzulässigen Spannungseinbruch führen würde.

Das hilfsweise Zuschalten des Verbrauchers 3 in den Schritten 20,32 bzw. 41 sollte stufenweise oder über eine Rampe erfolgen, um nicht hier bereits einen Spannungseinbruch zu erzeugen.

## Patentansprüche

1. Verfahren zur Stabilisierung der Versorgungsspannung in einem Energieversorgungssystem, insbesondere einem Kfz-Bordnetz, das von einer Batterie (1), an der mehrere Verbraucher (3, 4, 5) angeschlossen sind, und einem Generator (2) gespeist wird, **gekennzeichnet durch** folgende Schritte
- überprüfen der Leistungsfähigkeit der Batterie (1) mittels einer Batteriezustanderkennung (6), und
- hilfsweises Einschalten des nicht benötigten Verbrauchers (3), wenn eine schwache oder ausgefallene Batterie festgestellt wird, um die vom Generator (2) gelieferte Leistung zu erhöhen, und
- ausschalten des hilfsweise zugeschalteten Verbrauchers (3), wenn eine Versorgungsspannung unter einen vorgegebenen Wert absinkt oder **durch** Einschalten eines neuen Verbrauchers (4, 5) absinken würde.

2. Verfahren nach Anspruch 1, **dadurch gekennzeichnet, dass** das Ausschalten des hilfsweise zugeschalteten Verbrauchers (3) durch Selbstauslösung erfolgt.

3. Verfahren nach Anspruch 1 oder 2, **dadurch gekennzeichnet, dass** das Ausschalten des hilfsweise zugeschalteten Verbrauchers (3) mittels einer Steuereinheit (6) erfolgt.

4. Verfahren nach Anspruch 1 oder 2, ferner **gekennzeichnet durch** folgende Schritte:
- Hilfsweises Einschalten eines weiteren nicht benötigten Verbrauchers (5), wenn der erste hilfsweise eingeschaltete Verbraucher (3) von einem Benutzer eingeschaltet wird.

5. Verfahren nach einem der vorhergehenden Ansprüche, **dadurch gekennzeichnet, dass** der hilfsweise zugeschaltete Verbraucher (3) eine Schalteinrichtung (S) aufweist, die den Verbraucher (3) bei Unterschreiten einer Spannungsgrenze automatisch abschaltet.

6. Verfahren nach einem der vorhergehenden Ansprüche, **dadurch gekennzeichnet, dass** der hilfsweise zugeschaltete Verbraucher (3)eine Heizung, insbesondere eine Heckscheiben- oder Sitzheizung ist.

7. Verfahren nach einem der vorhergehenden Ansprüche, **dadurch gekennzeichnet, dass** neben dem hilfsweise zugeschalteten Verbraucher (3) weitere Verbraucher (5) abgeschaltet werden.

8. Verfahren nach Anspruch 4, **dadurch gekennzeichnet, dass** die Steuereinheit (6) den hilfsweise zugeschalteten Verbraucher (3) abschaltet und anschließend einen weiteren Verbraucher (4, 5) zuschaltet.

## Claims

1. Method for stabilizing the supply voltage in a power supply system, in particular in an on-board motor vehicle electrical supply system, which is fed by a battery (1), to which a plurality of loads (3, 4, 5) are connected, and a generator (2), **characterized by** the following steps
- checking the performance of the battery (1) by means of a battery-state identification device (6), and
- alternatively switching-on the load (3), which is not required, when a weak or exhausted battery is detected in order to increase the power supplied by the generator (2), and
- switching-off the load (3), which is alternatively switched on, when a supply voltage falls below a prespecified value or would fall below the said value by a new load (4, 5) being switched on.

2. Method according to Claim 1, **characterized in that** the load (3), which is alternatively switched on, is switched off by self-tripping.

3. Method according to Claim 1 or 2, **characterized in that** the load (3), which is alternatively switched on, is switched off by means of a control unit (6).

4. Method according to Claim 1 or 2, further **characterized by** the following steps:
- alternatively switching-on a further load (5), which is not required, when the first load (3), which is alternatively switched on, is switched on by a user.

5. Method according to one of the preceding claims, **characterized in that** the load (3), which is alternatively switched on, has a switching device (S) which automatically switches off the load (3) when a voltage limit is undershot.

6. Method according to one of the preceding claims, **characterized in that** the load (3), which is alternatively switched on, is, in particular, a rear-windscreen or seat heater.

7. Method according to one of the preceding claims, **characterized in that** further loads (5) are switched off in addition to the load (3) which is alternatively switched on.

8. Method according to Claim 4, **characterized in that** the control unit (6) switches off the load (3), which is alternatively switched on, and then switches on a further load (4, 5).

## Revendications

1. Procédé de stabilisation de la tension d'alimentation dans un système d'alimentation en énergie, notamment dans le réseau embarqué d'un véhicule automobile, assuré à partir de la batterie (1) pour être relié à plusieurs utilisateurs (3, 4, 5) et alimenté par un générateur (2),
**caractérisé par** les étapes suivantes :
- contrôle de la réserve de puissance de la batterie (1) à l'aide d'une détection d'état de batterie (6), et
- accessoirement branchement de l'utilisateur (3) non nécessaire, si l'on constate une batterie faible ou défaillante pour recueillir la puissance fournie par le générateur (2), et
- coupure de l'utilisateur (3) branché de manière accessoire si la tension d'alimentation descend en dessous d'une valeur prédéfinie ou diminuerait si un nouvel utilisateur (4, 5) était branché.

2. Procédé selon la revendication 1,
**caractérisé en ce que**
la coupure de l'utilisateur (3) branché de manière auxiliaire se fait par déclenchement automatique.

3. Procédé selon l'une quelconque des revendications 1 ou 2,
**caractérisé en ce que**
la coupure de l'utilisateur (3) branché de manière auxiliaire se fait par une unité de commande (6).

4. Procédé selon l'une quelconque des revendications 1 ou 2,
**caractérisé en outre par** l'étape suivante :
- branchement accessoire d'un autre utilisateur (5) non nécessaire si le premier utilisateur (3) était branché accessoirement par un intéressé.

5. Procédé selon l'une quelconque des revendications précédentes,
**caractérisé en ce que**
l'utilisateur (3) branché à titre auxiliaire comporte une installation de commutation (S) qui coupe automatiquement l'utilisateur (3) lorsqu'on passe en dessous d'une limite de tension.

6. Procédé selon l'une quelconque des revendications précédentes,
**caractérisé en ce que**
l'utilisateur (3) branché de façon auxiliaire est un chauffage notamment un chauffage de lunette arrière ou de siège.

7. Procédé selon l'une quelconque des revendications précédentes,
**caractérisé en ce qu'**
à côté de l'utilisateur (3) branché de manière auxiliaire, on coupe également d'autres utilisateurs (3).

8. Procédé selon la revendication 4,
**caractérisé en ce que**
l'unité de commande (6) coupe l'utilisateur (3) branché de manière auxiliaire et branche ensuite un autre utilisateur.
